(19) Europäisches Patentamt / European Patent Office / Office européen des brevets

(11) **EP 3 871 384 B1**

(12) **FASCICULE DE BREVET EUROPEEN**

(45) Date de publication et mention de la délivrance du brevet:
**04.10.2023 Bulletin 2023/40**

(21) Numéro de dépôt: **19794893.8**

(22) Date de dépôt: **09.10.2019**

(51) Classification Internationale des Brevets (IPC):
**H04L 25/02** *(2006.01)*     **H04B 7/0413** *(2017.01)*

(52) Classification Coopérative des Brevets (CPC):
**H04L 25/0204;** H04B 7/0413; H04L 25/0256

(86) Numéro de dépôt international:
**PCT/EP2019/077298**

(87) Numéro de publication internationale:
**WO 2020/083641 (30.04.2020 Gazette 2020/18)**

(54) **PROCÉDÉ D'ESTIMATION D'UN CANAL DE COMMUNICATION SANS FIL, DISPOSITIF D'ESTIMATION D'UN CANAL DE COMMUNICATION SANS FIL ET PROGRAMME D'ORDINATEUR ASSOCIÉS**

VERFAHREN ZUR SCHÄTZUNG EINES DRAHTLOSKOMMUNIKATIONSKANALS, ZUGEHÖRIGE VORRICHTUNG ZUR SCHÄTZUNG EINES DRAHTLOSKOMMUNIKATIONSKANALS UND COMPUTERPROGRAMM

METHOD FOR ESTIMATING A WIRELESS COMMUNICATION CHANNEL, ASSOCIATED DEVICE FOR ESTIMATING A WIRELESS COMMUNICATION CHANNEL AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2018 FR 1859952**

(43) Date de publication de la demande:
**01.09.2021 Bulletin 2021/35**

(73) Titulaire: **Fondation B Com**
**35510 Cesson Sevigne (FR)**

(72) Inventeurs:
• **LE MAGOAROU, Luc**
**35700 RENNES (FR)**
• **LE CALVEZ, Antoine**
**22300 LANNION (FR)**
• **PAQUELET, Stéphane**
**35700 RENNES (FR)**

(74) Mandataire: **Ermeneux, Bertrand**
**AVOXA**
**5 allée Ermengarde d'Anjou**
**ZAC Atalante Champeaux**
**CS 40824**
**35108 Rennes (FR)**

(56) Documents cités:
• **LUC LE MAGOAROU ET AL: "Bias-variance tradeoff in MIMO channel estimation", ARXIV.ORG, CORNELL UNIVERSITY LIBRARY, 201 OLIN LIBRARY CORNELL UNIVERSITY ITHACA, NY 14853, 20 avril 2018 (2018-04-20), XP081228195,**
• **ZHOU ZHOU ET AL: "Spherical Wave Channel and Analysis for Large Linear Array in LoS Conditions", 2015 IEEE GLOBECOM WORKSHOPS (GC WKSHPS), IEEE, 6 décembre 2015 (2015-12-06), pages 1-6, XP032871031, DOI: 10.1109/GLOCOMW.2015.7414041**
• **CHENG XUDONG ET AL: "Geometrical Model for Massive MIMO Systems", 2017 IEEE 85TH VEHICULAR TECHNOLOGY CONFERENCE (VTC SPRING), IEEE, 4 juin 2017 (2017-06-04), pages 1-6, XP033254316, DOI: 10.1109/VTCSPRING.2017.8108325**

**Description**

**1. <u>Domaine de l'invention</u>**

Le domaine de l'invention est celui des systèmes de communication sans fil, en particulier les systèmes massivement multi-antennes dits « Massive MIMO » (pour « Massive Multiple Input Multiple Output » en anglais).

**2. <u>Présentation de l'art antérieur</u>**

L'invention se place dans le cadre de l'étude des réseaux mobiles en particulier ceux de la 5e génération (5G). Les débits de données envisagés pour ces réseaux dits 5G sont très élevés. Pour les atteindre, les systèmes multi-antennes (MIMO) sont prometteurs, car leur débit théorique maximal évolue proportionnellement au nombre d'antennes utilisées, à puissance d'émission fixée.

Cependant, atteindre un débit théorique maximal peut être problématique. Il faut pour cela mettre en oeuvre des traitements bien plus complexes que pour des systèmes à une seule antenne. Il est en outre préférable de connaître le canal de transmission (encore appelé canal de communication) qui sépare l'émetteur du récepteur. Pour cela on réalise une estimation du canal de communication.

Pour un système avec $N_t$ antennes à l'émission et $N_r$ antennes à la réception, l'estimation de canal MIMO consiste à déterminer un coefficient complexe par fréquence pour chacun des $N_r N_t$ couples d'antennes du système. Dans le cas où $N_t$ et/ou $N_r$ est très élevé (on parle alors de système massivement multi-antennes : « Massive MIMO »), il est très coûteux d'estimer chacun des coefficients de manière indépendante. Les documents Zhou Zhou et al. « Spherical Wave Channel and Analysis for large Linear Array in LoS conditions », 2015 IEEE Globecom Workshops (GC WKSHPS) IEEE 6 décembre 2015, pages 1-6, XP032871031 et Chen Duong et al. « Geometrical Model for Massive MIMO Systems », 2017 IEEE 85th Vehicular Technology Conférence (VTC SPRING) , IEEE 4 juin 2017, p.1-6 XP033254316, par exemple, proposent une modélisation sphérique du canal de communication pour les systèmes « Massive MIMO ».

Il est alors possible d'utiliser un modèle physique qui permet de prendre en compte des relations de liaison entre les coefficients et ainsi réduire le nombre de paramètres à estimer, et par conséquent le coût de l'estimation. Les modèles physiques utilisés dans l'état de l'art, postulent que le récepteur est suffisamment éloigné de l'émetteur par rapport à leurs tailles respectives pour que les fronts d'ondes sphériques soient bien approchés par des plans : c'est l'hypothèse ondes planes. Cette hypothèse est faite par toutes les méthodes d'estimation basées sur un modèle physique, voir par exemple l'article fondateur « Bajwa et al.: Compresser Channel Sensing: A New Approach to Estimating Sparse Multipath Channels » Vol. 98, No. 6, June 2010 ou le document Luc Le Mogoarou et al. « Bias variance tradeoff in MIMO channel estimation » ARXIV.ORG, Cornell University Library, NY 14853, 20 avril 2018, XP081228195 qui décrit une estimation de canal pour les systèmes multi-antennes mettant en oeuvre un modèle d'ondes planes et un procédé d'ajustement du nombre de chemin estimés et du compromis à effectuer entre les termes de variances et de biais lors de cet ajustement.

Les systèmes massivement multi-antennes pour les réseaux mobiles de 5e génération sont amenés à avoir de plus en plus d'antennes. Les émetteurs/récepteurs seront de fait de plus en plus grands. Cela implique l'hypothèse ondes planes ne sera vérifiée que pour des distances de plus en plus grandes.

Ceci met en défaut les méthodes d'estimation actuelles, en particulier dans le cas de très grands réseaux d'antennes et/ou de récepteurs proches de l'émetteur.

L'invention a notamment pour objectif de pallier à ces inconvénients de l'art antérieur.

**3. <u>Exposé de l'invention</u>**

L'invention est définie dans les revendications indépendantes.

Selon un premier aspect de l'invention, il est proposé un procédé d'estimation d'un canal de communication sans fil entre un émetteur et un récepteur selon la revendication 1.

Les inventeurs proposent une nouvelle façon d'estimer un canal de communication sans fil, à partir d'une matrice dite caractéristique qui prend en compte non seulement une direction de propagation, mais également une distance de propagation. Cette matrice caractéristique permet une meilleure estimation du canal de communication, notamment lorsque la configuration émetteur/récepteur (par exemple liée à la taille des antennes et/ou de la distance entre l'émetteur et le récepteur) ne permet pas de vérifier l'hypothèse ondes planes.

De préférence, selon un mode de mise en oeuvre, la matrice caractéristique associée au trajet dépend en outre d'au moins l'un des deux éléments suivants :

- au moins un vecteur reliant le centre de gravité du réseau d'antennes de l'émetteur et au moins une antenne de l'émetteur,

- au moins un vecteur reliant centre de gravité du réseau d'antennes du récepteur et au moins une antenne du récepteur.

Ce mode de mise en oeuvre permet de prendre en compte toutes les configurations de réseaux d'antennes à l'émission et à la réception, quel que soit le nombre d'antennes et leurs positions dans l'espace.

Le modèle d'ondes paraboliques a pour avantage de permettre une meilleure estimation du canal lorsque l'hypothèse ondes planes n'est plus valide, mais sans la complexité liée à l'hypothèse ondes sphériques, qui est particulièrement coûteuse en temps de calcul.

De préférence, selon une première alternative d'un mode de mise en oeuvre de l'invention, le procédé inclut en outre une étape préalable de validation du modèle de canal dont dépend la matrice caractéristique, qui comprend :

une obtention de la distance entre les centres de gravité des réseaux d'antennes du récepteur d'une part et de l'émetteur d'autre part,

une comparaison de ladite distance à un premier et un second seuil,

une validation d'un modèle ondes planes si la distance obtenue est supérieure au second seuil, du modèle ondes dites paraboliques si la distance obtenue est comprise entre le premier et le second seuil, et le modèle ondes sphériques si la distance obtenue est inférieure au premier seuil.

Cette étape préalable permet de valider la pertinence du modèle de canal choisi pour une estimation de canal qui sera réalisée ultérieurement, notamment pour le contexte émetteur/récepteur considéré. Avantageusement, le modèle validé lors de l'étape préalable est optimal pour l'estimation de canal à réaliser.

De préférence :

le premier seuil est fonction de la distance à la puissance 3/2 entre le centre de l'ensemble des antennes de l'émetteur et le centre de l'ensemble des antennes de l'émetteur, et

le second seuil est fonction de la distance au carré entre le centre de l'antenne de l'émetteur la plus éloignée du centre de l'ensemble des antennes de l'émetteur et le centre de l'ensemble des antennes de l'émetteur.

Le choix de ce premier et de ce deuxième seuil est particulièrement simple à implémenter.

De préférence, selon une deuxième alternative d'un mode de mise en oeuvre de l'invention, le procédé inclut en outre une étape préalable de validation du modèle de canal dont dépend la matrice caractéristique, qui comprend

une détermination d'une erreur relative d'approximation du modèle pour au moins un premier et un deuxième modèle, chaque erreur relative d'approximation du modèle étant fonction d'un écart entre un modèle de référence et l'un desdits deux modèles

une comparaison de chaque erreur relative d'approximation du modèle à une valeur prédéterminée de marge d'erreur, et

une validation ou non du premier modèle de canal ou du deuxième modèle de canal en fonction du résultat de la comparaison.

Cette deuxième alternative permet de s'affranchir d'un écart de déphasage arbitraire dont dépend la première alternative présentée ci-avant. Elle permet également de mieux tenir compte des positions relatives et de l'orientation des antennes de l'émetteur et/ou du récepteur.

De préférence, procédé comprend en outre pour un deuxième trajet :

- Une deuxième estimation d'une deuxième valeur de distance de propagation associée audit deuxième trajet, et d'une deuxième direction de propagation associée audit deuxième trajet, et une détermination d'une deuxième matrice caractéristique dépendant de ladite deuxième valeur de distance de propagation et de ladite deuxième direction de propagation estimées, ainsi que d'un résidu résultant de la première estimation.

Avantageusement, ce mode de mise en oeuvre permet de réaliser une estimation de canal dans le cas où plusieurs trajets existent, via une séquence d'estimations simples ne considérant qu'un unique trajet (algorithme dit « glouton »).

Selon un deuxième aspect de l'invention, il est proposé un dispositif d'estimation d'un canal de communication sans fil entre un émetteur et un récepteur selon la revendication 5.

Selon un troisième aspect de l'invention, il est proposé un programme d'ordinateur selon la revendication 9.

Selon un quatrième aspect de l'invention, il est proposé un support d'enregistrement, lisible par un processeur, selon la revendication 10.

## 4. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la **Figure 1** illustre de façon schématique un système comprenant un émetteur et des récepteurs pouvant intégrer un mode de réalisation de l'invention ;

- les **Figures 2** et **3** illustrent respectivement des procédés de précodage et de démodulation implémentant un mode de mise en oeuvre selon l'invention ;

- la **Figure 4** illustre plus précisément et de façon schématique un système émetteur/récepteur pouvant implémenter un mode de réalisation de l'invention ;

- la **Figure 5** illustre à titre d'exemple, un modèle général de représentation du système de communication schématisé sur la figure 4 ;

- la **Figure 6** représente un mode de mise en oeuvre d'un procédé d'estimation du canal de communication selon l'invention ;

- les **Figures 7a** et **7b** représentent des mises en oeuvre de deux alternatives d'une d'étape préalable de validation d'un modèle d'ondes, selon l'invention ;

- la **Figure 8** illustre un exemple de mise en oeuvre de l'étape de réalisation d'une estimation de canal, représenté sur de la figure 6 ;

- la **Figure 9** illustre un autre exemple de mise en oeuvre de l'étape de réalisation d'une estimation de canal, représenté sur de la figure 6 ; et

- la **Figure 10** illustre une manière particulière de réaliser un moyen de traitement pour un émetteur ou un récepteur.

## 5. Description d'un mode de réalisation particulier de l'invention

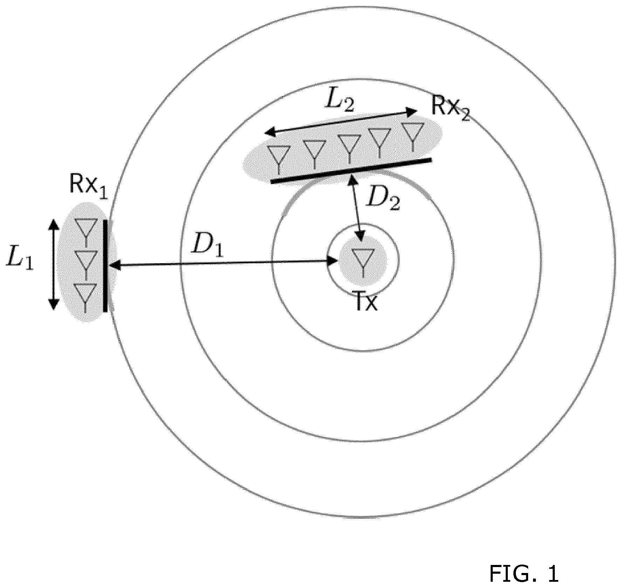

La **Figure 1** illustre un exemple de système de communication dans lequel s'inscrit l'invention.

Dans cet exemple, un émetteur Tx ou un émetteur/récepteur tel qu'une station de base, communique avec deux récepteurs $Rx_1$ et $Rx_2$ (ou émetteurs/récepteurs) respectivement formé d'une ou d'une pluralité d'antennes. Un canal de communication sans fil comprenant un ou plusieurs trajets (encore appelés chemins) relie l'émetteur Tx à chacun des récepteurs $Rx_1$ et $Rx_2$. Le canal de communication (ou canal de transmission) permet de transmettre des signaux depuis l'émetteur vers chacun des récepteurs, le récepteur ayant accès au signal émis déformé par son passage par le canal, et auquel du bruit thermique s'est éventuellement ajouté. Il est connu que chaque trajet constituant le canal est associé à un gain complexe, défini par un déphasage et une atténuation.

Le premier récepteur $Rx_1$ de dimension L1 (par exemple une longueur caractéristique du premier récepteur, ou alors le diamètre d'un cercle dans lequel s'inscrit l'ensemble des antennes du premier récepteur) est localisé à une distance $D_1$ de l'émetteur Tx. Cette distance est suffisamment grande pour que l'hypothèse ondes planes soit applicable, malgré la taille du récepteur.

A l'inverse, le second récepteur $Rx_2$ de dimension L2 est situé à une distance $D_2$ de l'émetteur Tx. La dimension L2 correspond par exemple au diamètre d'un cercle dans lequel s'inscrit un système de 256 antennes associées entre-elles si l'on se place dans le cas d'un récepteur « massive MIMO ». La longueur $D_2$ est insuffisante pour permettre l'application de l'hypothèse ondes planes. En effet la courbure des ondes symbolisées par les cercles concentriques, est trop importante du point de vue du récepteur $Rx_2$.

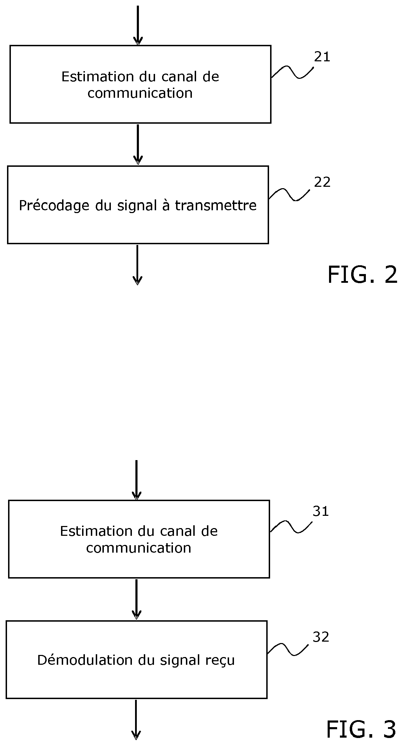

Pour un signal à transmettre depuis un émetteur vers un récepteur, un précodage du signal à transmettre est effectué pour maximiser le débit de données sur le canal de communication sans fil. Comme illustré sur la **Figure 2,** une première étape 21 d'estimation du canal de communication sans fil est réalisée, afin de connaître les paramètres définissant ce canal de communication. Puis un précodage 22 du signal à transmettre via ce canal de communication est effectué à partir des paramètres obtenus lors de l'étape d'estimation du canal de communication.

Pour un signal reçu par un récepteur depuis un émetteur, une démodulation du signal reçu via le canal de communication est effectuée de façon à maximiser le débit de données sur le canal. Comme représenté sur la **Figure 3,** une première étape 31 d'estimation du canal de communication sans fil est réalisée, afin de connaître les paramètres définissant ce canal de communication, à partir de signaux émis connus. Puis une démodulation 32 du signal reçu du canal de communication est effectuée à partir du canal estimé, ou autrement dit des paramètres obtenus lors de l'étape d'estimation du canal de communication.

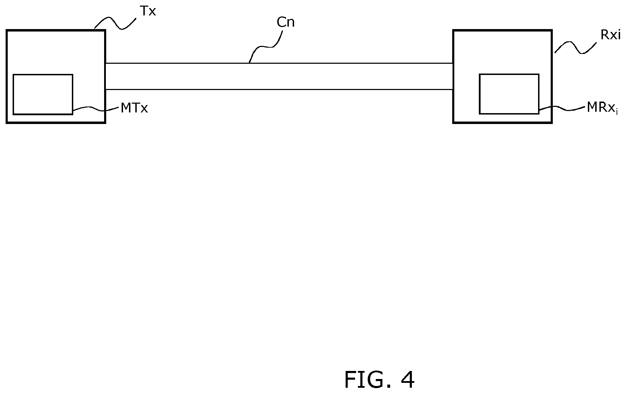

La **Figure 4** illustre très schématiquement un dispositif implémentant un mode de réalisation de l'invention. Un émetteur Tx est relié à un récepteur Rx$_i$ via un canal de communication sans fil Cn symbolisé par un rectangle. L'émetteur Tx comprend un moyen de traitement MTx configuré entre autre pour mettre en oeuvre les étapes 21 et 22 décrites en référence à la Figure 2.

Le récepteur Tx comprend un moyen de traitement MRx$_i$ configuré entre autre pour mettre en oeuvre les étapes 31 et 32 décrites en référence à la Figure 3.

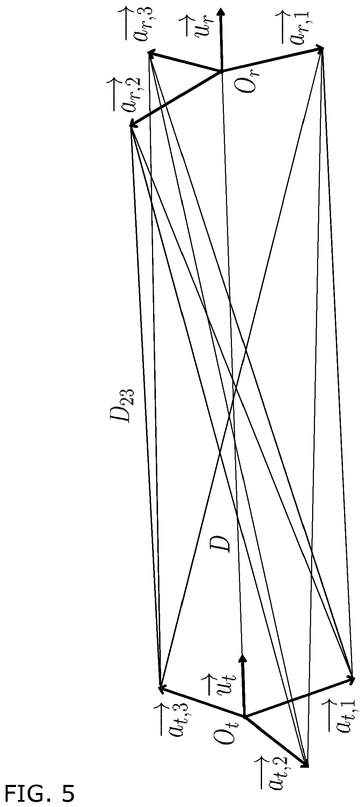

La **Figure 5** illustre à titre d'exemple, un modèle général de représentation du système de communication schématisé sur la figure 4, dans un cas d'une transmission en ligne de vue directe (« *line of sight* » ou LoS en langue anglaise).

Un point $O_t$ (respectivement $O_r$) correspond au centre de gravité du réseau d'antennes d'émission (respectivement de réception).

Des vecteurs $\{\overrightarrow{a_{t,1}}, \ldots, \overrightarrow{a_{t,N_t}}\}$ et $\{\overrightarrow{a_{r,1}}, \ldots, \overrightarrow{a_{r,N_r}}\}$ correspondent aux positions des antennes d'émission et de réception par rapport à leurs centres de gravité respectifs (des repères locaux différents sont utilisés pour l'émission et la réception). De plus, une distance de référence $D$ correspond à la distance qui sépare les deux centres de gravité $O_t$ et $O_r$.

La notation $D_{ij}$ désigne la distance qui sépare la j-ème antenne d'émission et la i-ème antenne de réception. Dans l'exemple de la figure 5, la distance $D_{23}$ entre la deuxième antenne de l'émetteur et la troisième antenne du récepteur est représentée. $\overrightarrow{u_t}$ correspond à la direction de propagation des ondes au départ du canal de communication dans le repère centré sur $O_t$ et $\overrightarrow{u_r}$ à la direction de propagation des ondes à l'arrivée du canal de communication dans le repère centré sur $O_r$.

En faisant l'hypothèse d'une atténuation et d'une phase proportionnelles à la distance $D_{ij}$ parcourue par les ondes, le canal de transmission à la fréquence $f$ entre la j-ème antenne d'émission et la i-ème antenne de réception s'exprime de la façon suivante :

$$h_{ij} = h\frac{D}{D_{ij}}e^{-j\frac{2\pi}{\lambda}(D_{ij}-D)},$$

où $\lambda \triangleq \frac{c}{f}$ est la longueur d'onde, $c$ correspondant la vitesse de la lumière, et $h$ correspond au canal entre les points $O_t$ et $O_r$.

De plus, les distances $D$ et $D_{ij}$ étant assez proches en pratique, l'hypothèse $\frac{D}{D_{ij}} = 1$ est faite. Enfin, la distance $D_{ij}$ s'exprime de la manière suivante

$$D_{ij} = \sqrt{D^2 + 2D(\overrightarrow{a_{r,i}}.\overrightarrow{u_r} - \overrightarrow{a_{t,j}}.\overrightarrow{u_t}) + \left\|\mathbf{R}\overrightarrow{a_{r,i}} - \overrightarrow{a_{t,j}}\right\|^2},$$

où R est une matrice de rotation permettant de mettre en correspondance les repères locaux utilisés à l'émission et à la réception.

En considérant comme exacte cette expression pour la distance, les inventeurs ont pu établir une nouvelle définition du modèle ondes sphériques (SWM), telle qu'exprimé ci-dessous :

$$\Delta_{\text{SWM},ij} \triangleq D_{ij} - D = \sqrt{D^2 + 2D(\overrightarrow{a_{r,i}}.\overrightarrow{u_r} - \overrightarrow{a_{t,j}}.\overrightarrow{u_t}) + \left\|\mathbf{R}\overrightarrow{a_{r,i}} - \overrightarrow{a_{t,j}}\right\|_2^2} - D,$$

On obtient donc pour expression du canal :

$$h_{ij} = he^{-j\frac{2\pi}{\lambda}\Delta_{\text{SWM},ij}}.$$

Classiquement, du fait de l'hypothèse du modèle ondes planes, les modèles physiques de l'état de l'art utilisés pour l'estimation de canal approchent l'expression $\Delta_{\text{SWM},ij}$ par

$$\Delta_{\text{PWM},ij} = \overrightarrow{a_{r,i}}.\overrightarrow{u_r} - \overrightarrow{a_{t,j}}.\overrightarrow{u_t},$$

Cette expression beaucoup moins complexe que celle utilisée dans le cas de l'hypothèse du modèle ondes sphériques, pose le problème du manque de précision dans le cas de récepteur et/ou émetteur comportant de larges antennes.

Pour résoudre ce problème de complexité (et donc de coût en terme de temps de calcul) posé par le modèle d'ondes sphériques et d'imprécision posé par le modèle d'onde plane, les inventeurs ont proposé un nouveau modèle d'ondes intermédiaire dit modèle ondes paraboliques (ParWM), tel que défini ci-dessous :

$$\Delta_{\text{ParWM},ij} = \overrightarrow{a_{r,i}}.\overrightarrow{u_r} - \overrightarrow{a_{t,j}}.\overrightarrow{u_t} + \frac{1}{2D}\left[\left\|\mathbf{R}\overrightarrow{a_{r,i}} - \overrightarrow{a_{t,j}}\right\|^2 - (\overrightarrow{a_{r,i}}.\overrightarrow{u_r} - \overrightarrow{a_{t,j}}.\overrightarrow{u_t})^2\right].$$

Ce nouveau modèle constitue un compromis entre le modèle ondes planes PWM et le modèle ondes sphériques SWM : il est plus précis que le PWM, et moins complexe que le SWM. En effet, l'expression de $\Delta_{\text{ParWM},ij}$ ne comporte que des produits et des additions alors que celle de $\Delta_{\text{SWM},ij}$ comporte une racine carrée.

Dans la suite de la description, à des fins de simplification, l'invention sera placée dans le contexte particulier dit MISO (« Multiple In Single Out » en langue anglaise) multi-trajets, c'est-à-dire que l'on considère que le récepteur comprend une seule antenne. Bien entendu, l'homme du métier saura facilement étendre l'invention au contexte MIMO en considérant l'expression générale de la différence de distance $D_{ij}$ ou l'une de ses approximations proposées ci-avant.

Dans le contexte MISO, le récepteur n'a qu'une seule antenne, $N_r = 1$. En conséquence, la matrice de Rotation **R**, facteur du vecteur représentatif de la direction d'arrivée du signal sur les antennes du récepteur, disparait de l'équation. Cela correspond par exemple à des réseaux 5G conçus pour des stations de bases ayant un grand nombre d'antennes et des terminaux mobiles n'ayant qu'une seule antenne. Dans ce cas, les expressions données précédemment permettent de prendre en compte non seulement les canaux de communication constitués d'un unique trajet en vue directe mais aussi les trajets issus de réflexions sur des plans en vue indirecte. Chaque trajet est associé à un gain complexe correspondant au canal entre les centres de gravité des réseaux d'antennes d'émission et de réception.

Les inventeurs ont proposé une expression générale du canal de communication comprenant p trajets. Cette expression est valable pour les trois modèles considérés SWM, PWM et ParWM :

$$\mathbf{h}_{\mathcal{M}} = \sqrt{N_t} \sum_{k=1}^{p} h_k \mathbf{e}_{\mathcal{M}}(\overrightarrow{u_{t,k}}, D_k),$$

où $\mathcal{M}$ désigne le modèle physique choisi,

$h_k$, $\overrightarrow{u_{t,k}}$ et $D_k$ sont respectivement le canal de transmission entre les centres de gravité des réseaux d'antennes d'émission et de réception, la direction de départ lors de la propagation des ondes pour le k-ième trajet et la distance parcourue par les ondes pour le k-ième trajet, et

$\mathbf{e}_{\mathcal{M}}(\overrightarrow{u_{t,k}}, D_k) \in \mathbb{C}^{N_t}$ est un vecteur dit caractéristique du modèle physique M pour ce k-ième trajet. Dans le cas où l'émetteur et le récepteur comprennent chacun plusieurs antennes, le canal de communication est alors défini par une matrice caractéristique dont les dimensions sont données par le nombre d'antennes à l'émetteur et au récepteur. Dans l'exemple considéré où le récepteur comporte une seule antenne, la matrice caractéristique comprend une seule colonne. On parle alors de vecteur caractéristique.

Ce vecteur caractéristique s'exprime de manière générale comme suit :

$$\mathbf{e}_{\mathcal{M}}(\overrightarrow{u_{t,k}}, D_k) = \frac{1}{\sqrt{N_t}} \begin{pmatrix} e^{-j\frac{2\pi}{\lambda}\Delta_{\mathcal{M},1k}} \\ \vdots \\ e^{-j\frac{2\pi}{\lambda}\Delta_{\mathcal{M},N_tk}} \end{pmatrix},$$

Avec pour les modèles ondes sphériques SWM et paraboliques ParWM :

$$\Delta_{\mathrm{SWM},jk} = \sqrt{D_k^2 + 2D_k(\overrightarrow{a_{t,j}}.\overrightarrow{u_{t,k}}) + \left\|\overrightarrow{a_{t,j}}\right\|_2^2} - D_k,$$

$$\Delta_{\mathrm{ParWM},jk} = -\overrightarrow{a_{t,j}}.\overrightarrow{u_{t,k}} + \frac{1}{2D_k}\left[\left\|\overrightarrow{a_{t,j}}\right\|^2 - (\overrightarrow{a_{t,j}}.\overrightarrow{u_{t,k}})^2\right].$$

Dans le cas du modèle d'ondes planes PWM avec $\Delta_{\mathrm{PWM},jk} = -\overrightarrow{a_{t,j}}.\overrightarrow{u_{t,k}}$, l'expression du vecteur ne dépend pas de la distance mais uniquement de la direction de départ, il s'agit simplement d'un vecteur directionnel (« steering vector » en anglais) que l'on peut noter $e_{\mathrm{PWM}}(\overrightarrow{u_{t,k}})$. Ce modèle ne permet donc pas de prendre en compte la courbure des fronts d'onde. Au contraire, les vecteurs caractéristiques des modèles d'ondes sphériques SWM et paraboliques ParWM dépendent de la distance et permettent de prendre en compte la courbure du front d'onde. Il est à noter qu'une seule expression générale du canal de communication permet l'utilisation des trois modèles.

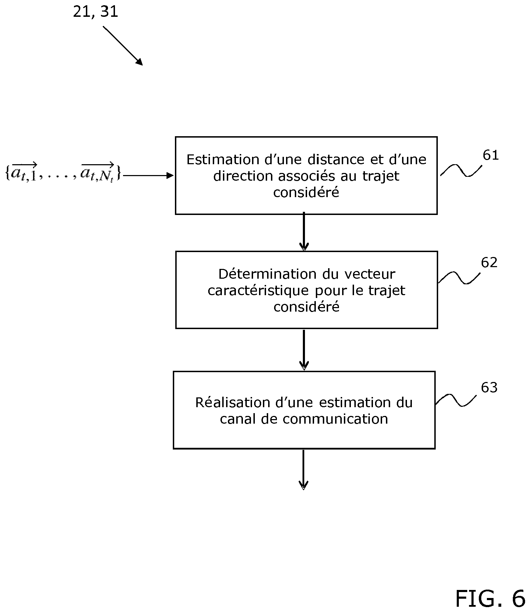

Dans le cas où il est préférable de tenir compte du rayon de courbure du front d'onde, il est proposé un procédé d'estimation du canal de communication (par exemple pour les étapes 21 ou 31 des figures 2 ou 3), dont un mode de réalisation est illustré sur la **Figure 6.**

Une première étape 61 comprend pour un ou plusieurs trajets, une estimation d'une valeur représentative de la distance de propagation associée au trajet considéré (ou une estimation d'une valeur permettant de l'inférer par la suite).

Par exemple, cette distance peut être assimilée à la distance entre le centre (ou barycentre) de l'émetteur et le centre du récepteur.

En variante, cette distance peut être assimilée à la distance entre une antenne de l'émetteur et l'antenne du récepteur.

Cette première étape 61 comprend également une estimation de la direction de départ de l'onde $\overrightarrow{u_{t,k}}$ pour le ou les trajets considérés (ou d'une autre grandeur représentative de cette direction permettant de l'inférer par la suite). Les vecteurs $\{\overrightarrow{a_{t,1}},...,\overrightarrow{a_{t,Nt}}\}$ peuvent également être estimés durant cette étape 61. En variante, ces vecteurs peuvent être fournis par défaut en entrée de l'étape 61.

Une deuxième étape 62 comprend l'estimation d'un vecteur caractéristique par trajet selon l'invention, à partir des valeurs estimées durant l'étape 61.

Une réalisation de l'estimation du canal de communication est ensuite effectuée lors d'une étape 63 à partir des vecteurs caractéristiques déterminés dans l'étape 62.

Selon un mode de réalisation de l'invention, il est particulièrement avantageux de réaliser une étape préalable de validation du modèle de canal dont dépend le vecteur caractéristique. Un but de cette étape est de confirmer que le modèle de canal utilisé est bien valide pour la distance $D$ séparant l'émetteur du récepteur.

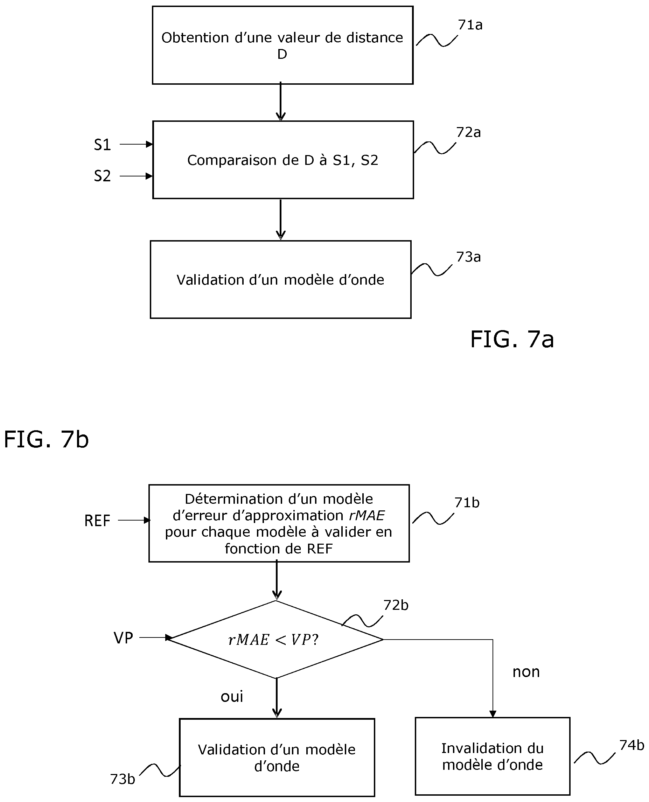

Un premier exemple d'étape préalable est illustré sur la **Figure 7a.** Il est autorisé un écart de déphasage d'au plus $\frac{\pi}{8}$ par rapport au déphasage du modèle d'ondes sphériques $\frac{2\pi}{\lambda}\Delta_{\mathrm{SWM},jk}$, pour valider le modèle d'ondes planes.

Si l'on borne $\frac{2\pi}{\lambda}\left|\Delta_{\mathrm{SWM},jk} - \Delta_{\mathrm{PWM},jk}\right|$ et $\frac{2\pi}{\lambda}\left|\Delta_{\mathrm{SWM},jk} - \Delta_{\mathrm{ParWM},jk}\right|$, où $\Delta_{\mathrm{PWM},jk}$ et $\Delta_{\mathrm{ParWM},jk}$ sont respectivement les déphasages des modèles d'ondes planes et paraboliques, en utilisant le fait que $\left|\overrightarrow{a_{t,j}}.\overrightarrow{u_t}\right| \leq R_t$ où $R_t \triangleq \max_i \left\|\overrightarrow{a_{t,i}}\right\|_2$ ($\|.\|_2$ désignant la norme euclidienne classique), il vient :

- $D \geq \dfrac{8R_t^2}{\lambda}$ pour le modèle ondes planes, cette borne étant définie comme la distance de Fraunhofer,

- $D \geq \sqrt{\dfrac{8R_t^3}{\lambda}}$ pour le modèle ondes paraboliques, cette borne pouvant être définie comme la distance de Fresnel.

$R_t$ correspond ici au rayon du plus petit cercle dans lequel s'inscrit le réseau d'antennes formant l'émetteur.

Comme illustré sur la figure 7a, une première étape 71a comprend une obtention de la distance $D$ entre le centre de l'émetteur et celui du récepteur. Puis la comparaison dans une étape 72a entre cette distance $D$ et deux seuils $S_1$ et $S_2$ avec par exemple $S_1 = \sqrt{\dfrac{8R_t^3}{\lambda}}$ et $S_2 = \dfrac{8R_t^2}{\lambda}$.

Enfin une étape 73a de validation de l'utilisation du modèle d'onde plane si $D \geq \dfrac{8R_t^2}{\lambda}$, du modèle d'ondes paraboliques si $\dfrac{8R_t^2}{\lambda} > D \geq \sqrt{\dfrac{8R_t^3}{\lambda}}$, et du modèle d'ondes sphériques si $D \geq \sqrt{\dfrac{8R_t^3}{\lambda}}$.

Cette alternative est simple à mettre en oeuvre, mais elle a toutefois l'inconvénient de se baser sur un écart de déphase arbitraire de $\dfrac{\pi}{8}$. De plus elle est indépendante de la position (une fois la distance obtenue) et de l'orientation relative du récepteur par rapport à l'émetteur.

Une autre alternative illustrée sur la **Figure 7b** permet de résoudre ces problèmes. Cette alternative repose sur une métrique appelée erreur relative d'approximation du modèle (*rMAE*), définie ci-dessous :

$$\text{rMAE} \triangleq \frac{\left\| \mathbf{h} - \text{proj}_{\mathcal{M}}(\mathbf{h}) \right\|_2^2}{\|\mathbf{h}\|_2^2}$$

où $\text{proj}_{\mathcal{M}}(\mathbf{u}) \triangleq \text{argmin}_{\mathbf{x} \in \mathcal{M}} \|\mathbf{u} - \mathbf{x}\|_2$, où M est le modèle à valider et h est le canal de référence, ici le canal obtenu avec le modèles ondes sphériques. L'erreur relative d'approximation du modèle quantifie une l'erreur d'approximation minimale qu'implique le modèle M considéré.

On peut considérer que le modèle M est valide lorsque la rMAE est faible (par exemple si rMAE < 0.05, ce qui correspond à une erreur d'au plus 5%). Par exemple si l'on considère un réseau linéaire uniforme de 256 antennes pour l'émetteur à 30GHz et un récepteur situé face au grand côté (« *broadside* » en anglais) de l'émetteur, le modèle ondes paraboliques est valide (rMAE < 0.05) si la distance $D$ entre l'émetteur et le récepteur est supérieure à 2.5m.

Plus précisément cette alternative comprend une première étape 71b où l'on détermine une erreur d'approximation rMAE pour un modèle donné en considérant un modèle de référence REF, par exemple le modèle ondes sphériques. Lors d'un test 72b, on compare l'erreur relative d'approximation du modèle à une valeur prédéterminée de marge d'erreur VP, par exemple 5%. Si l'erreur relative d'approximation du modèle est inférieure à 5%, dans ce cas, le modèle donné est validé, étape 73b. Sinon, il est écarté car trop imprécis pour la configuration émetteur/récepteur considérée, étape 74b. Il est à noter que le modèle ondes paraboliques décrit ci-avant devient suffisamment précis à partir de quelques mètres seulement.

En utilisant la structure linéaire des relations entre les signaux émis et les coefficients de canal, une réalisation d'une estimation de canal peut-être basée sur des observations de la forme :

$$\mathbf{y} = \mathbf{X}\mathbf{h} + \mathbf{n},$$

où **h** est le canal à estimer, **X** est la matrice d'observation (qui contient les symboles pilotes utilisés pour l'estimation de canal) et **n** représente le bruit.

Le problème de la réalisation de l'estimation du canal peut être reformulé comme ci-dessous :

$$\underset{\mathbf{E},\alpha}{\text{minimiser}} \left\| \mathbf{y} - \mathbf{X}\mathbf{E}\alpha \right\|_2^2, \quad \hat{\mathbf{h}} \leftarrow \mathbf{E}\alpha,$$

où $\mathbf{E} \triangleq \left( \mathbf{e}_{\mathcal{M}}(\overrightarrow{u_{t,1}}, D_1), \ldots, \mathbf{e}_{\mathcal{M}}(\overrightarrow{u_{t,p}}, D_p) \right)$, $\alpha \triangleq \sqrt{N_t}(h_1, \ldots, h_p)^T$ et $\hat{h}$ est le canal estimé.

Selon un mode de mise en oeuvre, il est proposé une réalisation d'estimation de canal utilisant le vecteur caractéristique défini ci-avant, ce vecteur caractéristique permettant une description unifiée des trois modèles : ondes planes, paraboliques et sphériques. Les algorithmes considérés ici sont dits gloutons, car les trajets sont estimés un par un, en se basant sur un résidu issu de l'estimation des trajets précédents.

Une première alternative comprend une estimation d'un vecteur caractéristique du modèle d'ondes sphérique ou paraboliques par la résolution du problème d'optimisation suivant lors de l'estimation du k-ième trajet :

$$\overrightarrow{u_{t,k}}, D_k \leftarrow \underset{\overrightarrow{u_t}, D}{\mathrm{argmax}} \frac{\left| \mathbf{r}^{(k)H} \mathbf{X} \mathbf{e}_{\mathcal{M}}(\overrightarrow{u_t}, D) \right|}{\left\| \mathbf{X} \mathbf{e}_{\mathcal{M}}(\overrightarrow{u_t}, D) \right\|_2},$$

où $\mathcal{M}$ désigne le modèle choisi, $\mathbf{e}_{\mathcal{M}}(\overrightarrow{u_t}, D)$ le vecteur caractéristique pour le modèle $\mathcal{M}$ et $r^{(k)}$ est un résidu résultant de l'itération précédente, tel que :

$$\mathbf{r}^{(1)} = \mathbf{y},$$

$$\mathbf{r}^{(k+1)} = \mathbf{y} - \mathbf{X}\mathbf{E}^{(k)}\alpha^{(k)},$$

avec le vecteur optimal $a^{(k)} \leftarrow (\mathbf{E}^{(k)H}\mathbf{X}^H\mathbf{X}\mathbf{E}^{(k)})^{-1}\mathbf{E}^{(k)H}\mathbf{X}^H\mathbf{y}$ où $\mathbf{E}^{(k)} \triangleq \left( \mathbf{e}_{\mathcal{M}}(\overrightarrow{u_{t,1}}, D_1), \ldots, \mathbf{e}_{\mathcal{M}}(\overrightarrow{u_{t,k}}, D_k) \right)$ représente l'état de la matrice E à la $k$-ième itération. Il est précisé que $H$ est ici le symbole bien connu de la transconjugaison.

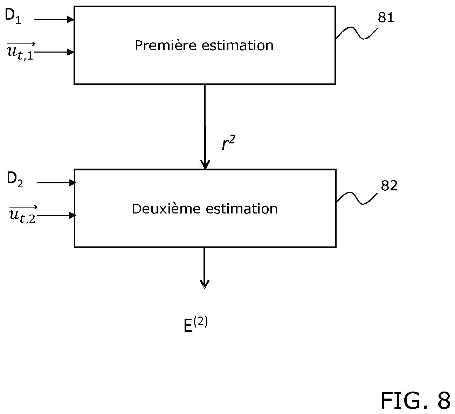

La **Figure 8** illustre une mise en oeuvre de l'étape 63 de la figure 6 par exemple, dans le cas où deux itérations sont opérées, respectivement pour un premier et un deuxième trajet. L'extension à une mise en oeuvre pour $k$ itérations peut être facilement déduite par l'homme de l'art, à partir de cet exemple de la figure 8.

Une étape 81 comprend une première estimation pour un premier trajet à partir des valeurs déterminées de la distance $D_1$ associée au premier trajet et de la direction $\overrightarrow{u_{t,1}}$ également associée au premier trajet. Un résidu $r^{(2)}$ obtenu tel que décrit ci-dessus est délivré en entrée d'une deuxième étape 82. Cette deuxième étape comporte une deuxième estimation pour un deuxième trajet à partir des valeurs déterminées de la distance $D_2$ associée au deuxième trajet, de la direction $\overrightarrow{u_{t,2}}$ également associée au deuxième trajet et du résidu $r^{(2)}$ obtenu lors de l'étape 81.

La matrice $\mathbf{E}^{(2)}$ est délivrée à l'issue de l'étape 82, permettant de déterminer le canal estimé $\hat{\mathbf{h}}$ à partir de l'équation précédemment mentionnée : $\hat{\mathbf{h}} \leftarrow \mathbf{E}^{(2)}\alpha^{(2)}$

A noter que dans le cas où un seul trajet est considéré, seule l'étape 81 est effectuée.

L'avantage de cette alternative est une grande précision dans le canal estimé obtenu. Cependant, la réalisation de l'estimation de canal est possible en construisant un dictionnaire de $N_{\overrightarrow{u_t}}N_D$ vecteurs caractéristiques (correspondant à $N_{\overrightarrow{u_t}}$ directions de départ et $N_D$ distances). La complexité de la résolution approchée de ce problème est donc $O(N_{\overrightarrow{u_t}}N_D)$. En effet, cette alternative implique de tester toutes les distances pour chacune des directions, ce qui induit une forte complexité calculatoire.

Une autre mise en oeuvre moins coûteuse est possible en estimant le vecteur caractéristique du modèle choisi (ondes sphériques ou paraboliques) via la résolution du problème d'optimisation

$$\overrightarrow{u_{t,k}} \leftarrow \underset{\overrightarrow{u_t}}{\mathrm{argmax}} \frac{\left| \mathbf{r}^{(k)H} \mathbf{X} \mathbf{e}_{\mathrm{PWM}}(\overrightarrow{u_t}) \right|}{\left\| \mathbf{X} \mathbf{e}_{\mathrm{PWM}}(\overrightarrow{u_t}) \right\|_2},$$

$$D_k \leftarrow \underset{D}{\mathrm{argmax}} \frac{\left| \mathbf{r}^{(k)H} \mathbf{X} \mathbf{e}_{\mathcal{M}}(\overrightarrow{u_{t,k}}, D) \right|}{\left\| \mathbf{X} \mathbf{e}_{\mathcal{M}}(\overrightarrow{u_t}, D) \right\|_2}.$$

Cette autre mise en oeuvre correspond à une estimation séquentielle des directions de propagation respectivement associées à chaque trajet, puis des distances également associées à chaque trajet. Sa complexité est $O(N_{\overrightarrow{u_t}} + N_D)$. En effet, la stratégie revient à ne tester plusieurs distances que pour la meilleure direction de propagation. Cette meilleure direction de propagation peut être par exemple déterminée avec des fronts d'ondes plans.

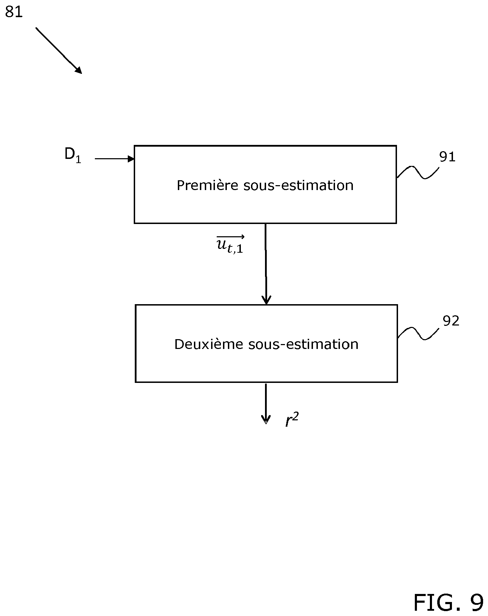

La **Figure 9** illustre un exemple de cette autre mise en oeuvre, par exemple pour la première estimation 81 de la figure précédente. Une première étape 91 de sous-estimation consiste à fixer la valeur de la distance $D_1$ et à déterminer la meilleure direction $\overrightarrow{u_{t,1}}$ (celle qui maximise la fonction de coût). Lorsque cette meilleure direction de propagation est déterminée, une deuxième sous-estimation 92 revient à tester plusieurs distances pour cette meilleure direction de propagation. A l'inverse, dans un mode de mise en oeuvre alternatif, la première sous-estimation peut consister à trouver la meilleure valeur de distance possible pour une direction de propagation donnée (par exemple dans le cas d'une propagation très directive), puis lors de l'étape de deuxième sous-estimation tester les directions de propagation pour cette meilleur valeur de distance obtenue lors de l'étape de première sous-estimation.

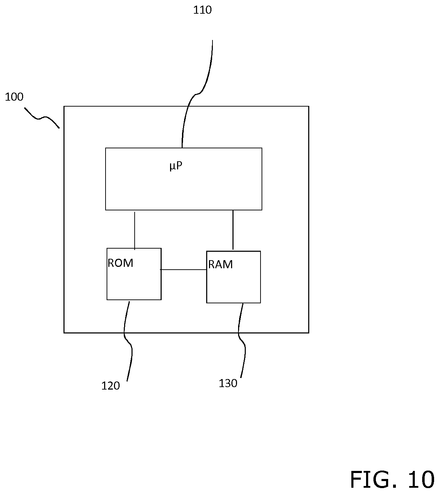

La **Figure 10** illustre une manière particulière, parmi plusieurs possibles, de réaliser un moyen de traitement 100 (pour un émetteur ou un récepteur) configuré pour mettre en oeuvre un mode de réalisation d'un procédé selon l'invention. Le dispositif 100 comprend une mémoire vive 130 (par exemple une mémoire RAM), une unité de traitement 110 équipée par exemple d'un processeur, et pilotée par un programme d'ordinateur stocké dans une mémoire morte 120 (par exemple une mémoire ROM ou un disque dur). A l'initialisation, les instructions de code du programme d'ordinateur sont par exemple chargées dans la mémoire vive 130 avant d'être exécutées par le processeur de l'unité de traitement 110.

La figure 10 illustrent seulement une manière particulière, parmi plusieurs possibles, de réaliser le moyen de traitement 100 afin qu'il effectue certaines étapes du procédé selon l'invention. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le moyen de traitement est réalisé avec une machine de calcul reprogrammable, le programme correspondant (c'est-à-dire la séquence d'instructions) pourra être stocké dans un médium de stockage amovible ou non, ce médium de stockage étant lisible partiellement ou totalement par un ordinateur ou un processeur.

## Revendications

1. Procédé d'estimation d'un canal de communication sans fil entre un émetteur et un récepteur, comprenant une pluralité de trajets permettant la propagation d'une onde, au moins l'émetteur ou le récepteur étant formé de plusieurs antennes, **caractérisé par le fait qu'**il comprend

   pour un premier trajet, une première estimation (81) d'une première valeur de distance de propagation associée au premier trajet, et d'une première direction de propagation associée au premier trajet, et une détermination d'une première matrice caractéristique dépendant de ladite première valeur de distance de propagation et de ladite première direction de propagation estimées, ladite première estimation pouvant être suivie,
   pour un deuxième trajet, d'une deuxième estimation (82), à partir d'un résidu de la première estimation, d'une deuxième valeur de distance de propagation associée audit deuxième trajet, et d'une deuxième direction de propagation associée audit deuxième trajet, et une détermination d'une deuxième matrice caractéristique dépendant de ladite deuxième valeur de distance de propagation et de ladite deuxième direction de propagation estimées,
   la définition des première et deuxième matrices caractéristiques dépendant d'un modèle ondes dites paraboliques décrivant un écart entre la distance entre les positions d'au moins une paire d'antennes formée par une antenne de l'émetteur et une antenne du récepteur d'une part, et la distance existant entre les centres de gravité des réseaux d'antennes du récepteur et de l'émetteur d'autre part, le modèle d'ondes dites paraboliques étant fonction uniquement :

      d'une grandeur représentative de la direction de propagation estimée, associée au trajet considéré, dépendant d'au moins l'un des éléments suivants :

         un vecteur de direction de départ de propagation associée au trajet considéré, et
         un vecteur de direction d'arrivée de propagation associée au trajet considéré,

      et d'un terme correctif fonction de la distance de propagation estimée, associée audit trajet,

   et **par le fait que** la première estimation, lorsque ledit procédé comprend ladite première estimation seulement, ou qu'au moins la première estimation ou la deuxième estimation, lorsque ledit procédé comprend ladite première estimation et ladite deuxième estimation, est effectuée en une première sous-estimation (91), pour une première grandeur fixée et une deuxième grandeur, distincte de la première grandeur, pouvant prendre une pluralité de valeurs prédéterminées, puis en une deuxième sous-estimation (92) pour la deuxième grandeur fixée à une valeur résultant de la première sous-estimation et la première valeur pouvant prendre une pluralité de valeurs prédéterminées, la première grandeur ou la deuxième grandeur étant l'un des éléments suivants :

la distance de propagation associée au trajet considéré, ou
la grandeur représentative de la direction de propagation associée au trajet considéré,

une estimation du canal de communication ($\hat{h}$) à partir de la première matrice caractéristique obtenue, lorsque ledit procédé comprend ladite première estimation seulement, ou à partir de la première et de la deuxième matrice, lorsque ledit procédé comprend ladite première estimation et ladite deuxième estimation.

2. Procédé selon la revendication 1, dans lequel la matrice caractéristique associée à au moins un trajet dépend en outre d'au moins l'un des deux éléments suivants :

- au moins un vecteur ($\{\overrightarrow{a_{t,1}},...,\overrightarrow{a_{t,Nt}}\}$) reliant le centre de gravité du réseau d'antennes de l'émetteur et au moins une antenne de l'émetteur,
- au moins un vecteur ($\{\overrightarrow{a_{r,1}},...,\overrightarrow{a_{r,Nt}}\}$) reliant centre de gravité du réseau d'antennes du récepteur et au moins une antenne du récepteur.

3. Procédé de précodage d'un signal à transmettre via un canal de communication, comprenant :

- une estimation (21) du canal de communication selon l'une quelconques des revendications précédentes afin d'obtenir un canal de communication estimé ($\hat{h}$), et
- un précodage (22) du signal à transmettre en fonction du canal de communication estimé.

4. Procédé de démodulation d'un signal reçu après propagation via un canal de communication, comprenant :

- une estimation (31) du canal de communication selon l'une quelconques des revendications 1 à 3 afin d'obtenir un canal de communication estimé (h), et
- une démodulation (32) du signal reçu en fonction du canal de communication estimé.

5. Dispositif d'estimation (100) d'un canal de communication sans fil entre un émetteur (Tx) et un récepteur ($Rx_i$), comprenant une pluralité de trajets permettant la propagation d'une onde, au moins l'émetteur ou le récepteur étant formé de plusieurs antennes, **caractérisé par le fait que** le dispositif comprend :

- un premier moyen d'estimation configuré pour mettre en oeuvre, pour au moins pour un premier trajet, une première estimation d'une première valeur de distance de propagation associée au premier trajet, et d'une première direction de propagation associée au premier trajet, et une détermination d'une première matrice caractéristique dépendant de ladite première valeur de distance de propagation et de ladite première direction de propagation estimées,
- de préférence,
un deuxième moyen d'estimation configuré pour mettre en oeuvre, pour un deuxième trajet, une deuxième estimation, à partir d'un résidu de la première estimation,
d'une deuxième valeur de distance de propagation associée audit deuxième trajet, et d'une deuxième direction de propagation associée audit deuxième trajet, et une détermination d'une deuxième matrice caractéristique, dépendant de ladite deuxième valeur de distance de propagation et de ladite deuxième direction de propagation estimées, la définition des première et deuxième matrices caractéristiques dépendant d'un modèle ondes dites paraboliques décrivant un écart entre la distance entre les positions d'au moins une paire d'antennes formée par une antenne de l'émetteur et une antenne du récepteur d'une part, et la distance existant entre les centres de gravité des réseaux d'antennes du récepteur et de l'émetteur d'autre part, le modèle d'ondes dites paraboliques étant fonction uniquement :

d'une grandeur représentative de la direction de propagation estimée, associée au trajet considéré, dépendant d'au moins l'un des éléments suivants :

un vecteur de direction de départ de propagation associée au trajet considéré, et
un vecteur de direction d'arrivée de propagation associée au trajet considéré,

et d'un terme correctif fonction de la distance de propagation estimée, associée audit trajet,

le premier moyen d'estimation, lorsque ledit dispositif comprend ledit première moyen d'estimation seulement, ou au moins le premier moyen d'estimation ou le deuxième moyen d'estimation, lorsque ledit dispositif comprend ledit premier moyen estimation et ledit deuxième moyen d'estimation, étant configuré pour effectuer une première sous-estimation, pour une première grandeur fixée et une deuxième grandeur, distincte de la première grandeur, pouvant prendre une pluralité de valeurs prédéterminées, puis une deuxième sous-estimation pour la deuxième grandeur fixée à une valeur résultant de la première sous-estimation et la première valeur pouvant prendre une pluralité de valeurs prédéterminées,
la première grandeur ou la deuxième grandeur étant l'un des éléments suivants :

la distance de propagation associée au trajet considéré, ou
la grandeur représentative de la direction de propagation associée au trajet considéré, et un moyen de réalisation configuré pour mettre en oeuvre une réalisation d'une estimation du canal de communication ($\hat{h}$) à partir de la première matrice caractéristique obtenue, lorsque ledit dispositif comprend ledit première moyen d'estimation seulement, ou à partir de la première et de la deuxième matrice, lorsque ledit dispositif comprend ledit premier moyen estimation et ledit deuxième moyen d'estimation.

6. Dispositif selon la revendication 5, dans lequel la matrice caractéristique associée au trajet dépend en outre d'au moins l'un des deux éléments suivants :

- au moins un vecteur ($\{\overrightarrow{a_{t,1}},...,\overrightarrow{a_{t,Nt}}\}$) reliant le centre de gravité du réseau d'antennes de l'émetteur et au moins une antenne de l'émetteur,
- au moins un vecteur ($\{\overrightarrow{a_{r,1}},...,\overrightarrow{a_{r,Nr}}\}$) reliant centre de gravité du réseau d'antennes du récepteur et au moins une antenne du récepteur.

7. Système de précodage d'un signal à transmettre via un canal de communication, comprenant :

- un dispositif d'estimation du canal de communication selon l'une quelconques des revendications 5 à 6, afin d'obtenir un canal de communication estimé,

ledit système de precodage étant configuré pour mettre en oeuvre un précodage du signal à transmettre en fonction du canal de communication estimé.

8. Système de démodulation d'un signal reçu après propagation via un canal de communication, comprenant :

- un dispositif d'estimation du canal de communication selon l'une quelconques des revendications 5 à 6 afin d'obtenir un canal de communication estimé,

Ledit système de démodulation étant configuré pour mettre en oeuvre une démodulation du signal reçu en fonction du canal de communication estimé.

9. Programme d'ordinateur comportant des instructions qui, lorsque le programme est exécuté par un processeur, conduisent celui-ci à mettre en œuvre les étapes d'un procédé selon l'une quelconques des revendications 1 à 4.

10. Support d'enregistrement, lisible par un processeur, **caractérisé en ce qu'**il est configuré pour mémoriser le programme d'ordinateur selon la revendication 9.


**Patentansprüche**

1. Verfahren zur Schätzung eines Drahtloskommunikationskanals zwischen einem Sender und einem Empfänger, umfassend eine Vielzahl von Wegen, die die Ausbreitung einer Welle gestatten, wobei mindestens der Sender oder der Empfänger aus mehreren Antennen gebildet ist, **dadurch gekennzeichnet, dass** es umfasst

für einen ersten Weg, eine erste Schätzung (81) eines erstes Ausbreitungsdistanzwerts, der dem ersten Weg zugeordnet ist, und einer ersten Ausbreitungsrichtung, die dem ersten Weg zugeordnet ist, und eine Bestimmung einer ersten charakteristischen Matrix, die von dem geschätzten ersten Ausbreitungsdistanzwert und von der geschätzten ersten Ausbreitungsrichtung abhängt, wobei die erste Schätzung verfolgbar ist,
für einen zweiten Weg, eine zweite Schätzung (82), ausgehend von einem Rest der ersten Schätzung, eines zweiten Ausbreitungsdistanzwerts, der dem zweiten Weg zugeordnet ist und einer zweiten Ausbreitungsrichtung, die dem zweiten Weg zugeordnet ist, und eine Bestimmung einer zweiten charakteristischen Matrix, die von dem geschätzten zweiten Ausbreitungsdistanzwert und von der geschätzten zweiten Ausbreitungsrichtung abhängt,

die Definition der ersten und zweiten charakteristischen Matrix in Abhängigkeit von einem Parabolwellenmodell, das eine Abweichung zwischen der Distanz zwischen den Positionen mindestens eines Antennenpaars, gebildet von einer Antenne des Senders und einer Antenne des Empfängers zum einen und der vorhandenen Distanz zwischen den Schwerkraftzentren der Antennennetzwerke des Empfängers und des Senders zum anderen beschreibt, wobei das Parabolwellenmodell nur abhängt von:

einer repräsentativen Größe der geschätzten Ausbreitungsrichtung, die dem entsprechenden Weg zugeordnet ist, in Abhängigkeit von mindestens einem der folgenden Elemente:

einem Vektor der Ausbreitungsstartrichtung, die dem entsprechenden Weg zugeordnet ist, und
einem Vektor der Ausbreitungsankunftsrichtung, die dem entsprechenden Weg zugeordnet ist,

und einem Korrekturterm in Abhängigkeit von der geschätzten Ausbreitungsdistanz, die dem Weg zugeordnet ist,

und dadurch, dass die erste Schätzung, wenn das Verfahren nur die erste Schätzung umfasst, oder mindestens die erste Schätzung oder die zweite Schätzung, wenn das Verfahren die erste Schätzung und die zweite Schätzung umfasst, in einer ersten Unter-Schätzung (91) für eine erste festgelegte Größe und eine zweite Größe, die von der ersten Größe verschieden ist, durchgeführt wird, die eine Vielzahl vorher festgelegter Werte annehmen kann, dann in einer zweiten Unter-Schätzung (92) für die zweite festgelegte Größe auf einen Wert, der aus der ersten Unter-Schätzung resultiert und der erste Wert eine Vielzahl vorher festgelegter Werte annehmen kann, wobei die erste Größe oder die zweite Größe eins der folgenden Elemente ist:

die Ausbreitungsdistanz, die dem entsprechenden Weg zugeordnet ist, oder
die repräsentative Größe der Ausbreitungsrichtung, die dem entsprechenden Weg zugeordnet ist,

eine Schätzung des Kommunikationskanals ($\hat{h}$) ausgehend von der erhaltenen ersten charakteristischen Matrix, wenn das Verfahren nur die erste Schätzung umfasst, oder ausgehend von der ersten und von der zweiten Matrix, wenn das Verfahren die erste Schätzung und die zweite Schätzung umfasst.

2. Verfahren nach Anspruch 1, wobei die charakteristische Matrix, die mindestens einem Weg zugeordnet ist, ferner von mindestens einem der zwei folgenden Elemente abhängt:

- mindestens einem Vektor ($\{\overrightarrow{a_{t,1}},...,\overrightarrow{a_{t,Nt}}\}$), der das Schwerkraftzentrum des Antennennetzwerks des Senders und mindestens eine Antenne des Senders verbindet,
- mindestens einem Vektor ($\{\overrightarrow{a_{r,1}},...,\overrightarrow{a_{r,Nr}}\}$), der das Schwerkraftzentrum des Antennennetzwerks des Empfängers und mindestens eine Antenne des Empfängers verbindet.

3. Verfahren zur Vorkodierung eines über einen Kommunikationskanal zu übertragenden Signals, umfassend:

- eine Schätzung (21) des Kommunikationskanals nach einem der vorangehenden Ansprüche, um einen geschätzten Kommunikationskanal ($\hat{h}$) zu erhalten, und
- eine Vorkodierung (22) des in Abhängigkeit vom geschätzten Kommunikationskanal zu übertragenden Signals.

4. Verfahren zur Demodulierung eines nach Ausbreitung über einen Kommunikationskanal empfangenen Signals, umfassend:

- eine Schätzung (31) des Kommunikationskanals nach einem der Ansprüche 1 bis 3, um einen geschätzten Kommunikationskanal ($\hat{\mathbf{h}}$) zu erhalten, und
- eine Demodulierung (32) des empfangenen Signals in Abhängigkeit vom geschätzten Kommunikationskanal.

5. Vorrichtung zur Schätzung (100) eines Drahtloskommunikationskanals zwischen einem Sender (Tx) und einem Empfänger (Rx$_i$), umfassend eine Vielzahl von Wegen, die die Ausbreitung einer Welle gestatten, wobei mindestens der Sender oder der Empfänger aus mehreren Antennen gebildet ist, **dadurch gekennzeichnet, dass** die Vorrichtung umfasst:

- ein erstes Schätzungsmittel, das dazu ausgelegt ist, für mindestens für einen ersten Weg eine erste Schätzung eines ersten Ausbreitungsdistanzwerts durchzuführen, der dem ersten Weg zugeordnet ist, und einer ersten Ausbreitungsrichtung, die dem ersten Weg zugeordnet ist, und eine Bestimmung einer ersten charakteristischen Matrix, die von dem geschätzten ersten Ausbreitungsdistanzwert und von der geschätzten ersten Ausbreitungsrichtung abhängt,
- vorzugsweise,

ein zweites Schätzungsmittel, das dazu ausgelegt ist, für einen zweiten Weg eine zweite Schätzung ausgehend von einem Rest der ersten Schätzung eines zweiten Ausbreitungsdistanzwerts durchzuführen, der dem zweiten Weg zugeordnet ist und einer zweiten Ausbreitungsrichtung, die dem zweiten Weg zugeordnet ist, und eine Bestimmung einer zweiten charakteristischen Matrix, die von dem geschätzten zweiten Ausbreitungsdistanzwert und von der geschätzten zweiten Ausbreitungsrichtung abhängt,

die Definition der ersten und zweiten charakteristischen Matrix in Abhängigkeit von einem Parabolwellenmodell, das eine Abweichung zwischen der Distanz zwischen den Positionen mindestens eines Antennenpaars, gebildet von einer Antenne des Senders und einer Antenne des Empfängers zum einen und der vorhandenen Distanz zwischen den Schwerkraftzentren der Antennennetzwerke des Empfängers und des Senders zum anderen beschreibt, wobei das Parabolwellenmodell nur abhängt von:

einer repräsentativen Größe der geschätzten Ausbreitungsrichtung, die dem entsprechenden Weg zugeordnet ist, in Abhängigkeit von mindestens einem der folgenden Elemente:

einem Vektor der Ausbreitungsstartrichtung, die dem entsprechenden Weg zugeordnet ist, und
einem Vektor der Ausbreitungsankunftsrichtung, die dem entsprechenden Weg zugeordnet ist,

und einem Korrekturterm in Abhängigkeit von der geschätzten Ausbreitungsdistanz, die dem Weg zugeordnet ist,

wobei das erste Schätzungsmittel, wenn die Vorrichtung nur das erste Schätzungsmittel umfasst, oder mindestens das erste Schätzungsmittel oder das zweite Schätzungsmittel, wenn die Vorrichtung das erste Schätzungsmittel und das zweite Schätzungsmittel umfasst, dazu ausgelegt ist, durchzuführen
eine erste Unter-Schätzung für eine erste festgelegte Größe und eine zweite Größe, die von der ersten Größe verschieden ist, die eine Vielzahl vorher festgelegter Werte annehmen kann, dann
eine zweite Unter-Schätzung für die zweite festgelegte Größe auf einen Wert, der sich aus der ersten Unter-Schätzung ergibt und wobei der erste Wert eine Vielzahl vorher festgelegter Werte annehmen kann,
wobei die erste Größe oder die zweite Größe eins der folgenden Elemente ist:

die Ausbreitungsdistanz, die dem entsprechenden Weg zugeordnet ist, oder
die repräsentative Größe der Ausbreitungsrichtung, die dem entsprechenden Weg zugeordnet ist,

und ein Realisierungsmittel, das dazu ausgelegt ist, eine Realisierung einer Schätzung des Kommunikationskanals ($\hat{\mathbf{h}}$) ausgehend von der erhaltenen ersten charakteristischen Matrix durchzuführen, wenn die Vorrichtung nur das erste Schätzungsmittel umfasst, oder ausgehend von der ersten und von der zweiten Matrix, wenn die Vorrichtung das erste Schätzungsmittel und das zweite Schätzungsmittel umfasst.

6. Vorrichtung nach Anspruch 5, wobei die charakteristische Matrix, die dem Weg zugeordnet ist, ferner von mindestens einem der zwei folgenden Elemente abhängt:

- mindestens einem Vektor ($\{\overrightarrow{a_{t,1}},...,\overrightarrow{a_{t,Nt}}\}$), der das Schwerkraftzentrum des Antennennetzwerks des Senders und mindestens eine Antenne des Senders verbindet,
- mindestens einem Vektor ($\{\overrightarrow{a_{r,1}},...,\overrightarrow{a_{r,Nr}}\}$), der das Schwerkraftzentrum des Antennennetzwerks des Empfängers und mindestens eine Antenne des Empfängers verbindet.

7. System zur Vorkodierung eines über einen Kommunikationskanal zu übertragenden Signals, umfassend:

- eine Vorrichtung zur Schätzung des Kommunikationskanals nach einem der Ansprüche 5 bis 6, um einen

# EP 3 871 384 B1

geschätzten Kommunikationskanal zu erhalten,

wobei das System zur Vorkodierung dazu ausgelegt ist, eine Vorkodierung des zu übertragenden Signals in Abhängigkeit vom geschätzten Kommunikationskanal durchzuführen.

**8.** System zur Demodulierung eines nach Ausbreitung über einen Kommunikationskanal empfangenen Signals, umfassend:

- eine Vorrichtung zur Schätzung des Kommunikationskanals nach einem der Ansprüche 5 bis 6, um einen geschätzten Kommunikationskanal zu erhalten,

wobei das System zur Demodulierung dazu ausgelegt ist, eine Demodulierung des empfangenen Signals in Abhängigkeit vom geschätzten Kommunikationskanal durchzuführen.

**9.** Rechnerprogramm, das Befehle aufweist, die, wenn das Programm von einem Prozessor ausgeführt wird, diesen veranlassen, die Schritte eines Verfahrens nach einem der Ansprüche 1 bis 4 auszuführen.

**10.** Prozessorlesbares Speichermedium, **dadurch gekennzeichnet, dass** es dazu ausgelegt ist, das Rechnerprogramm nach Anspruch 9 zu speichern.

## Claims

**1.** A method for estimating a wireless communication channel between a transmitter and a receiver, comprising a plurality of paths allowing the propagation of a wave, at least the transmitter or the receiver being formed of several antennas, **characterized in that** it comprises for a first path, a first estimate (81) of a first propagation distance value associated with the first path, and a first propagation direction associated with the first path, and a determination of a first characteristic matrix depending on said estimated first propagation distance value and said estimated first propagation direction, said first estimation possibly being followed,

for a second path, by a second estimate (82), from a residual resulting from the first estimate, of a second propagation distance value associated with said second path, and of a second propagation direction associated with said second path, and a determination of a second characteristic matrix depending on said estimated second propagation distance value and said estimated second propagation direction,
the definition of first and second characteristic matrices depending on a so-called parabolic wave model describing a distance between the positions of at least one pair of antennas formed by an antenna of the transmitter and an antenna of the receiver on the one hand, and the distance between the centers of gravity of the antenna arrays of the receiver and the transmitter on the other hand, the so-called parabolic wave model being solely a function of:

a quantity representative of the estimated propagation direction, associated with the path considered, depending on at least one of the following elements

a propagation start direction vector associated with the considered path, and
a propagation arrival direction vector associated with the considered path,

and a corrective term depending on the estimated propagation distance associated with the path,

and by the fact that the first estimate, when the method implements only the first estimate, or that at least the first estimate or the second estimate, when the method implements the first estimate and the second estimate, is carried out in a first underestimate (91), for a first fixed quantity and a second quantity, distinct from the first quantity, which can assume a plurality of predetermined values, and then in a second underestimate (92) for the second quantity fixed at a value resulting from the first underestimate and the first value being able to assume a plurality of predetermined values, the first quantity or the second quantity being one of the following elements:

the propagation distance associated with the path considered, or
the quantity representative of the direction of propagation associated with the path considered,

15

an estimate of the communication channel ($\hat{\mathbf{h}}$) from the first characteristic matrix obtained, when said method comprises said first estimate only, or from the first and the second characteristic matrices, when said method comprises said first estimate and said second estimate.

2.  The method of claim 1, wherein the characteristic matrix associated with the path further depends on at least one of the following two elements:

    - at least one vector ($\{\overrightarrow{a_{t,1}},...,\overrightarrow{a_{t,Nt}}\}$) connecting the center of gravity of the transmitter antenna array and at least one transmitter antenna,
    - at least one vector ($\{\overrightarrow{a_{r,1}},...,\overrightarrow{a_{r,Nr}}\}$) connecting the center of gravity of the receiver antenna array and at least one receiver antenna.

3.  A method for precoding a signal to be transmitted via a communication channel, comprising:

    - an estimate (21) of the communication channel according to any of the preceding claims in order to obtain an estimated communication channel ($\hat{\mathbf{h}}$), and
    - a precoding (22) of the signal to be transmitted according to the estimated communication channel.

4.  A method for demodulating a signal received after propagation via a communication channel, comprising :

    - an estimate (31) of the communication channel according to any of claims 1 to 3 to obtain an estimated communication channel ($\hat{\mathbf{h}}$), and
    - a demodulation (32) of the received signal according to the estimated communication channel.

5.  A device for estimating (100) a wireless communication channel between a transmitter (Tx) and a receiver (Rx$_i$), comprising a plurality of paths allowing the propagation of a wave, at least the transmitter or the receiver being formed of several antennas, **characterized in that** the device comprises:

    a first estimating means configured to implement, for at least a first path, a first estimate of a first propagation distance value associated with the first path, and of a first propagation direction associated with the first path, and a determination of a first characteristic matrix depending on said estimated first propagation distance value and said estimated first propagation direction, preferably, a second estimating means configured to implement, for a second path, a second estimate, from a residual resulting from the first estimate, of a second propagation distance value associated with said second path, and of a second propagation direction associated with said second path, and a determination of a second characteristic matrix depending on said estimated second propagation distance value and said estimated second propagation direction,
    the definition of first and second characteristic matrices depending on a so-called parabolic wave model describing a distance between the positions of at least one pair of antennas formed by an antenna of the transmitter and an antenna of the receiver on the one hand, and the distance between the centers of gravity of the antenna arrays of the receiver and the transmitter on the other hand,
    the so-called parabolic wave model being solely a function of:

        a quantity representative of the estimated propagation direction, associated with the path considered, depending on at least one of the following elements

            a propagation start direction vector associated with the considered path, and
            a propagation arrival direction vector associated with the considered path,

        and a corrective term depending on the estimated propagation distance associated with the path,

    the first estimating means, when the device comprises only the first estimating means, or at least the first estimating means or the second estimating means, when the device comprises the first estimating means and the second estimating means, being configured to perform
    a first underestimate, for a first fixed quantity and a second quantity, distinct from the first quantity, which can take a plurality of predetermined values, then
    a second underestimate for the second quantity set to a value resulting from the first underestimate and the first value can take a plurality of predetermined values,

the first size or the second size being one of the following:

the propagation distance associated with the path considered, or
the quantity representative of the direction of propagation associated with the path considered,

and an implementation means configured to implement an implementation of a communication channel estimate ($\hat{\mathbf{h}}$) from the obtained first characteristic matrix, when said device comprises said first estimating means only, or from first and second characteristic matrices, when said method comprises said first estimating means and said second estimating means.

6. The device of claim 5, wherein the characteristic matrix associated with the path further depends on at least one of the following two elements:

- at least one vector ($\{\overrightarrow{a_{t,1}},...,\overrightarrow{a_{t,Nt}}\}$) connecting the center of gravity of the transmitter antenna array and at least one transmitter antenna,
- at least one vector ($\{\overrightarrow{a_{r,1}},...,\overrightarrow{a_{r,Nr}}\}$) connecting the center of gravity of the antenna array of the receiver and at least one antenna of the receiver.

7. A system for precoding a signal to be transmitted via a communication channel, comprising:

- a communication channel estimate device according to any one of claims 5 to 6, to obtain an estimated communication channel,

said precoding system being configured to implement a precoding of the signal to be transmitted according to the estimated communication channel.

8. A system for demodulating a signal received after propagation via a communication channel, comprising:

- a communication channel estimate device according to any one of claims 5 to 6 to obtain an estimated communication channel,

said demodulation system being configured to implement a demodulation of the received signal according to the estimated communication channel.

9. A computer program comprising instructions that, when the program is executed by a processor, result in the implementation by the program of the steps of a method according to any one of claims 1 to 4.

10. A processor-readable recording medium, **characterized in that** it is configured to store the computer program according claim 9.

FIG. 1

Estimation du canal de communication — 21

Précodage du signal à transmettre — 22

FIG. 2

Estimation du canal de communication — 31

Démodulation du signal reçu — 32

FIG. 3

Tx

Cn

Rxi

MTx

MRx$_i$

FIG. 4

FIG. 5

21, 31

$\{\overrightarrow{a_{t,1}}, \ldots, \overrightarrow{a_{t,N_t}}\}$ ⟶

| Estimation d'une distance et d'une direction associés au trajet considéré | 61 |

↓

| Détermination du vecteur caractéristique pour le trajet considéré | 62 |

↓

| Réalisation d'une estimation du canal de communication | 63 |

↓

FIG. 6

FIG. 7a

FIG. 7b

$D_1$ →

$\overrightarrow{u_{t,1}}$ →

Première estimation — 81

↓ $r^2$

$D_2$ →

$\overrightarrow{u_{t,2}}$ →

Deuxième estimation — 82

↓

$E^{(2)}$

FIG. 8

81

$D_1$ → **Première sous-estimation** ⟿ 91

$\overrightarrow{u_{t,1}}$

**Deuxième sous-estimation** ⟿ 92

↓ $r^2$

FIG. 9

110

100

µP

ROM          RAM

120          130

FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Spherical Wave Channel and Analysis for large Linear Array in LoS conditions. **ZHOU ZHOU et al.** 2015 IEEE Globecom Workshops (GC WKSHPS). IEEE, 06 Décembre 2015, 1-6
- Geometrical Model for Massive MIMO Systems. **CHEN DUONG et al.** 2017 IEEE 85th Vehicular Technology Conférence (VTC SPRING). IEEE, 04 Juin 2017, 1-6
- **BAJWA et al.** *Compresser Channel Sensing: A New Approach to Estimating Sparse Multipath Channels,* Juin 2010, vol. 98 (6
- Bias variance tradeoff in MIMO channel estimation. **LUC LE MOGOAROU et al.** ARXIV.ORG. Cornell University Library, 20 Avril 2018, 14853